# EUROPÄISCHE PATENTANMELDUNG

(11) **EP 0 683 560 A2**
(43) Veröffentlichungstag der Anmeldung: **22.11.1995**
(21) Anmeldenummer: 95810303.8
(22) Anmeldetag: 05.05.1995
(51) Int. Cl.: H02M 5/458, H02M 1/15

(54) **Umrichter-Schaltungsanordnung mit elektronisch unterstütztem Energiespeicher im Zwischenkreis**

(30) Priorität: 16.05.1994 DE 4417089
(71) Anmelder: ABB Management AG, CH-5401 Baden (CH)
(72) Erfinder: Skarpetowski, Grzegorz, Dr., CH-5417 Untersiggenthal (CH)

(57) **Zusammenfassung**

Es wird eine Umrichter-Schaltungsanordnung angegeben, in welcher das Energiespeichervermögen des Zwischenkreises dadurch erhöht wird, dass parallel zum Zwischenkreiskondensator mindestens eine geschaltete Stromquelle in Form einer durch steuerbare Halbleiterschalter gespeiste Induktivität vorgesehen ist. Durch die erfindungsgemässe Anordnung kann die Energie im Zwischenkreis erhöht und damit die Separationswirkung verbessert werden, ohne dass die Kurzschlussstrombelastung vergrössert wird. Die geschaltete Stromquelle kann zur gezielten Bekämpfung von Oberschwingungen in der Zwischenkreisspannung eingesetzt werden. Sie wirkt damit wie ein Aktivfilter und übernimmt ganz oder teilweise die Funktion des Saugkreises.

## Beschreibung

### Technisches Gebiet

Die Erfindung bezieht sich auf das Gebiet der Leistungselektronik.

Sie geht aus von einer Umrichter-Schaltungsanordnung nach dem Oberbegriff des ersten Anspruchs.

### Stand der Technik

Eine solche Schaltungsanordnung wird schon im Artikel von W. Bölsterling et al. "Moderne Leistungshalbleiter in der Stromrichtertechnik", in etz Bd. 114 (1993) Heft 21, beschrieben.

Es handelt sich dabei um einen sogenannten U-Umrichter, d.h. einen Spannungszwischenkreisumrichter mit Gleichspannungszwischenkreis. Solche U-Umrichter weisen einen Zwischenkreis auf, welcher durch einen Energiespeicher gebildet wird, der an den Plus- und an den Minusanschluss einer Gleichspannung angeschlossen wird. Die Gleichspannung kann dabei entweder von einem Gleichspannungsnetz oder von einem Gleichrichter oder Vier-Quadranten-Steller (4qs) geliefert werden. Auf der Lastseite ist z.B. ein Antriebswechselrichter vorgesehen.

Diese U-Umrichter benötigen immer grössere Energiemengen im Zwischenkreis, um die geforderte Separationswirkung des Zwischenkreises, d.h. die Trennung der Oberschwingungen des Eingangsstromrichters von den Oberschwingungen des Antriebswechselrichters zu erreichen. Die Ausführung eines solchen Zwischenkreises und die Anpassung an den Stromrichter, insbesondere bei Leistungen wie sie in Traktionsanwendungen gefordert werden, bereitet grosse Probleme. Die Stromrichter der neuesten Generation weisen zu kleine Energiemengen auf, und die Separationswirkung ist nicht mehr vorhanden. Die Oberschwingungen des lastseitigen Wechselrichters falten sich mit den Oberschwingungen des Eingangsstromrichters, wodurch die Oberschwingungsbelastung des Netzes nur schwer beherrschbare Formen annimmt. Dadurch entsteht eine unakzeptable Situation und die Realisierbarkeit vieler Traktionsantriebe wird generell in Frage gestellt.

Abhilfe kann nur die Erhöhung der im Zwischenkreis gespeicherten Energie schaffen. Doch die Vergrösserung der Zwischenkreiskapazität kommt aus ökonomischen Gründen und wegen zu hoher Kurzschlussstrombelastung nicht in Frage.

### Darstellung der Erfindung

Aufgabe der vorliegenden Erfindung ist es deshalb, eine Umrichterschaltungsanordnung anzugeben, bei welcher die im Zwischenkreis gespeicherte Energie vergrössert werden kann ohne, dass die Kurzschlussstrombelastung zunimmt.

Diese Aufgabe wird bei einer Schaltungsanordnung der eingangs genannten Art durch die Merkmale des ersten Anspruchs gelöst.

Kern der Erfindung ist es also, dass der Energiespeicher neben der Zwischenkreiskapazität mindestens eine Stromquelle umfasst, welche nach Massgabe eines Soll-Istwert-Vergleichs der Spannung am Zwischenkreiskondensator einen Strom in die Zwischenkreiskapazität einspeist oder ihr einen Strom entzieht.

Gemäss einer bevorzugten Ausführungsform wird die Stromquelle durch eine elektronisch gesteuerte Induktivität gebildet. Zu diesem Zweck ist der eine Pol der Induktivität mittels eines Schalters mit dem Plusanschluss und über eine Freilaufdiode mit dem Minusanschluss verbunden. Der zweite Pol der Induktivität hingegen ist mittels eines Schalters mit dem Minusanschluss und über eine Freilaufdiode mit dem Plusanschluss verbunden.

Durch entsprechendes Schalten der Schalter kann nun Energie in Form eines Stromes aus der Induktivität in die Zwischenkreiskapazität gespeist oder von der Zwischenkreiskapazität bezogen werden. Die Schaltvorschrift wird nach Massgabe des Soll-Istwert-Vergleichs der Zwischekreisspannung vorgenommen. Falls der Sollwert ungefähr dem Istwert entspricht, so wird nur einer der Schalter geschlossen, so dass die Energie in der Induktivität gespeichert wird.

Die elektronisch gesteuerte Induktivität wirkt damit wie ein zusätzlicher Energiespeicher im Zwischenkreis, der entweder Energie abgeben, aufnehmen oder speichern kann. Im Kurzschlussfall trägt sie aber nicht zum Kurzschlussstrom bei, so dass die Energie im Zwischenkreis wie gefordert erhöht werden kann, ohne die Kurzschlussstrombelastung zu vergrössern. Somit kann aber die Zwischenkreiskapazität gegebenenfalls verkleinert werden. Die elektronisch gesteuerte Induktivität kann auch als ein Aktivfilter für ausgewählte Frequenzen eingesetzt werden. Die Speicherwirkung der gesteuerten Induktivität kann ausserdem so genutzt werden, dass der Saugkreis teilweise oder sogar ganz ersetzt werden kann.
Falls sehr hohe Energiemengen im Zwischenkreis gefordert sind, können auch mehrere Stromquellen bzw. gesteuerte Induktivitäten parallel zu einander vorgesehen werden. Bei höchsten Energien ist zudem die Verwendung einer supraleitenden Spule von Vorteil.

Weitere Ausführungsbeispiele ergeben sich aus den entsprechenden abhängigen Ansprüchen.

Die erfindungsgemässe Schaltungsanordnung zeichnet sich somit insbesondere durch ein erhöhtes Energiespeicherungsvermögen im Zwischenkreis aus, ohne dass die Kurzschlussstrombelastung jedoch zunehmen würde.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein Blockschaltbild einer erfindungsgemässen Umrichterschaltungsanordnung;
- **Fig. 2**: Die Ausführung der Stromquelle als elektronisch gesteuerte Induktivität;
- **Fig. 3**: Ein Blockschaltbild einer erfindungsgemässen Schaltungsanordnung mit Regelung.

Die in den Zeichnungen verwendeten Bezugszeichen und deren Bedeutung sind in der Bezeichnungsliste zusammengefasst aufgelistet. Grundsätzlich sind in den Figuren gleiche Teile mit gleichen Bezugszeichen versehen.

### Wege zur Ausführung der Erfindung

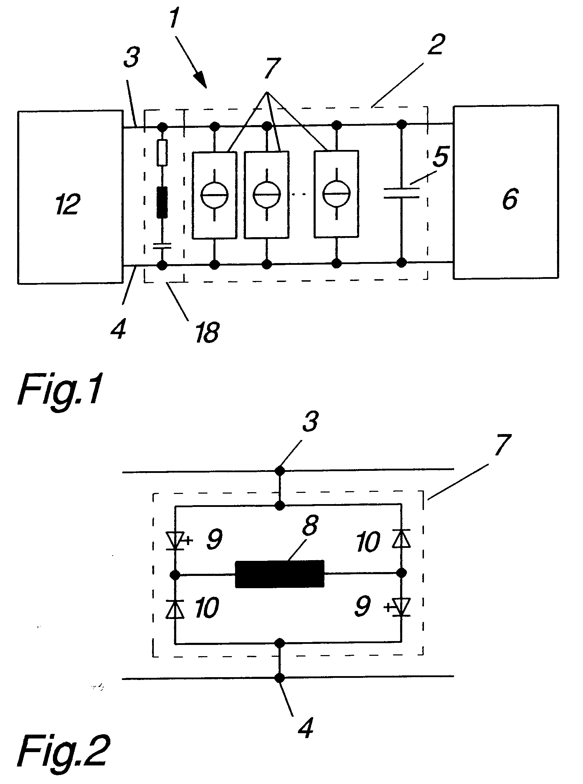

**Figur 1** zeigt ein Blockschaltbild einer erfindungsgemässen Umrichterschaltungsanordnung. Eine solche umfasst einen Gleichspannungszwischenkreis 1, welcher durch einen Energiespeicher 2 gebildet wird. Der Energiespeicher 2 ist mit einem Puls- 3 und einem Minusanschluss 4 verbunden. Zudem kann parallel zum Energiespeicher 2 ein Saugkreis 18 vorgesehen sein.

Eingangsseitig kann der Energiespeicher mit dem Puls- 3 bzw. Minusanschluss 4 entweder direkt an ein Gleichspannungsnetz oder an die Lastanschlüsse eines Gleichrichters oder eines Vierquadrantenstellers 12 (4qs) angeschlossen werden. Ausgangsseitig kann z.B. ein Antriebswechselrichter 6 vorgesehen sein.

Nach dem Stand der Technik wird der Energiespeicher 2 durch eine Zwischenkreiskapazität 5 gebildet. Diese Kapazität 5 nimmt die notwendige Separation zwischen Netz und Last vor. Will man nun die Separationswirkung verbessern, so kann dies bei einer Anordnung nach dem Stand der Technik nur durch eine Vergrösserung der Kapazität erfolgen. Dies ist jedoch sehr gefährlich, da im Falle eines Kurzschlusses der über den Kurzschlusspfad fliessende Strom viel zu gross wird und Beschädigungen der Stromrichterbestandteile z.B. durch Zerstörung der Leistungshalbleiterschalter verursachen kann.

Nach der Erfindung wird nun ein anderer Weg beschritten. Anstatt die Kapazität zu vergrössern wird parallel zur Zwischenkreiskapazität 5 mindestens eine gesteuerte Stromquelle 7 vorgesehen, welche entweder einen Strom in die Kapazität 5 einspeist, von der Kapazität einen Strom bezieht oder Energie speichert.

Die Entscheidung, ob ein Strom eingespeist oder entzogen werden soll, wird anhand eines Soll-Istwert-Vergleiches zwischen der geglätteten und gefilterten Zwischenkreisspannung Uzkglatt und der ungeglätteten bzw. ungefilterten Zwischenkreisspannung Uzk vorgenommen.

**Figur 2** zeigt eine bevorzugte Realisierung der gesteuerten Stromquelle 7. Diese umfasst eine Induktivität 8, welche einerseits über einen ersten Schalter 9 mit dem Plusanschluss 3 und über eine erste Freilaufdiode 10 mit dem Minusanschluss 4 verbunden ist und andererseits über einen zweiten Schalter 9 mit dem Minusanschluss 4 und über eine zweite Freilaufdiode 10 mit dem Plusanschluss 3 verbunden ist.

Bei den ersten und zweiten Schaltern handelt es sich vorzugsweise um abschaltbare Leistungshalbleiterschalter, insbesondere um GTOs oder Transistoren. Werden nun beide Schalter 9 geschlossen, so nimmt die Induktivität 8 von der Kapazität 5 Energie auf. Werden beide Schalter geöffnet, so fliesst ein Strom aus der Induktivität 8 in den Zwischenkreiskondensator 5. Wird schliesslich nur einer der Schalter geschlossen, so wird die Induktivität 8 über den Schalter 9 und die entsprechende Freilaufdiode 10 kurzgeschlossen und die Energie bleibt in der Induktivität gespeichert. Welcher der beiden Schalter in diesem Fall geschlossen werden soll, spielt keine Rolle, so dass beispielsweise durch abwechselndes Einschalten eine Belastungsgleichverteilung erreicht werden kann. Diese Schalterstellung wird auch im Falle eines Kurzschlusses über der Last oder wenn der Strom durch die Induktivität zu gross wird angewendet.

Die Taktung der Schalter erfolgt mit einer Frequenz von beispielsweise ca. 250 Hz, so dass Spannungs- oder Stromrippel im Zwischenkreis etwa diese und die doppelte Frequenz aufweisen. Ist die Frequenz für die Aktivfilterung zu tief oder die gespeicherte Energiemenge zu klein, so können mehrere gesteuerte Induktivitäten parallel geschaltet und versetzt getaktet werden, so dass eine höhere Frequenz auftritt. Die Parallelschaltung von erfindungsgemässen, gesteuerten Induktivitäten kann auch dort mit Vorteil angewendet werden, wo sehr hohe Energiemengen im Zwischenkreis benötigt werden.

In diesem Fall lohnt sich unter Umständen auch die Verwendung einer supraleitenden Spule als Induktivität.

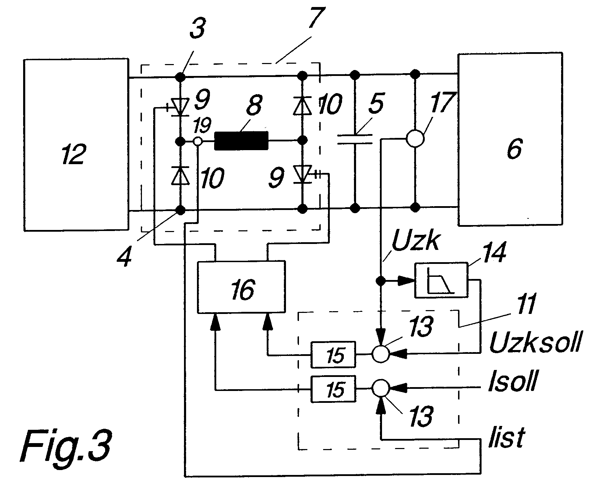

**Figur 3** zeigt ein mögliches Realisierungsbeispiel mit der Regelung und Ansteuerung der Schalter 9. Die Schalter 9 werden von einer Ansteuerlogik 16 angesteuert, in welcher der Schaltalgorithmus anhand von Regelgrössen, welche in einer Regeleinheit 11 gebildet werden, berechnet wird. In der Regeleinheit 11 wird ein zweifacher Soll-Istwert-Vergleich vorgenommen. Einerseits wird ein Stromistwert list durch die Induktivität gemessen und mit einem von aussen vorgegebenen Sollwert Isoll verglichen. Andererseits wird die Verzerrung der Zwischenkreisspannung ausgewertet.

Dazu ist erstens eine Strommesseinrichtung 19, welche den Strom durch die Induktivität misst, vorgesehen und zweitens eine Spannungsmesseinrichtung 17 vorgesehen, welche die Zwischenkreisspannung Uzk misst. Die Zwischenkreisspannung Uzk wird in einem Tiefpass 14 gefiltert, so dass auf der einen Seite der gefilterte, Oberwellen freie Teil der Zwischenkreisspannung Uzkglatt als Sollwert und die gemessene Spannung Uzk als Istwert zur Verfügung stehen. In einem Vergleicher werden diese beiden Werte verglichen und einem Regler 15, z.B. einem P-, PI- oder PID-Regler zugeführt. Ebenso wird mit dem Stromsoll- und dem Stromistwert verfahren. Die beiden Ausgangsgrössen der Regler 15 dienen schliesslich zur Steuerung der Ansteuerlogik 16.

In einem realisierten Ausführungsbeispiel mit dem erfindungsgemässen Energiespeicher konnte der Wert der Zwischenkreiskapazität von 12 mF auf 6 mF halbiert werden. Dabei kamen zwei mit 250 Hz getaktete Induktivitäten von je 6 mH zum Einsatz.

Insgesamt steht also mit dem erfindungsgemässen Energiespeicher eine Umrichter-Schaltungsanordnung zur Verfügung, bei welcher die Energie im Zwischenkreis gefahrlos vergrössert werden kann, bzw. die Zwischenkreiskapazität wirksam verkleinert werden kann.

### Bezeichnungsliste

- 1: Gleichspannungszwischenkreis
- 2: Energiespeicher
- 3: Plus-Anschluss
- 4: Minus-Anschluss
- 5: Zwischenkreiskapazität
- 6: Lastseitiger Wechselrichter
- 7: Stromquelle
- 8: Induktivität
- 9: abschaltbare Leistungshalbleiterschalter
- 10: Freilaufdioden
- 11: Regeleinheit
- 12: Gleichspannungsnetz/Gleichrichter/Vierquadrantensteller
- 13: Vergleicher
- 14: Tiefpass
- 15: Regler
- 16: Ansteuerlogik
- 17: Spannungsmesseinrichtung
- 18: Saugkreis
- 19: Strommesseinrichtung
- Iist: Stromistwert
- Isoll: Stromsollwert
- Uzk: Zwischekreisspannung
- Uzkglatt: geglättete Zwischenkreisspannung

## Patentansprüche

1. Umrichter-Schaltungsanordnung umfassend
a) einen Gleichspannungszwischenkreis (1), welcher durch einen Energiespeicher (2) gebildet wird, der an einen Plus- (3) und einen Minusanschluss (4) angeschlossen ist und eine Zwischenkreiskapazität (5) umfasst;
b) einen lastseitigen Wechselrichter (6), der an den Zwischenkreis (1) angeschlossen ist;
dadurch gekennzeichnet, dass
c) der Energiespeicher (2) ausserdem mindestens eine gesteuerte Stromquelle (7) umfasst, die nach Massgabe eines soll-Istwertvergleichs einen Strom in die Zwischenkreiskapazität (5) einspeist, der Zwischenkreiskapazität (5) einen Strom entzieht oder einen Strom speichert.

2. Schaltungsanordnung nach Anspruch 1, dadurch gekennzeichnet, dass die Stromquelle (7) eine elektronische gesteuerte Induktivität (8) umfasst.

3. Schaltungsanordnung nach Anspruch 2, dadurch gekennzeichnet, dass
a) ein Pol der Induktivität (8) mittels eines ersten abschaltbaren Leistungshalbleiterschalters (9), insbesondere eines GTOs, mit dem Plus-Anschluss (3) und über eine erste Freilaufdiode (10) mit dem Minus-Anschluss (4) verbunden ist;
b) der andere Pol der Induktivität (8) mittels eines zweiten abschaltbaren Leistungshalbleiterschalters (9), insbesondere eines GTOs, mit dem Minus-Anschluss (4) und über eine zweite Freilaufdiode (10) mit dem Plus-Anschluss (3) verbunden ist.

4. Schaltungsanordnung nach Anspruch 3, dadurch gekennzeichnet, dass der erste und zweite Leistungshalbleiterschalter (9) von einer Regeleinheit (11) angesteuert werden, in welcher der Soll-Istwert-Vergleich von einer oder mehreren Messgrössen vorgenommen wird.

5. Schaltungsanordnung nach Anspruch 4, dadurch gekennzeichnet, dass
a) die Regeleinheit (11) die beiden Leistungshalbleiterschalter (9) öffnet, falls der Istwert Zwischenkreisspannung Uzk zu gross ist;
b) die Regeleinheit (11) die beiden Leistungshalbleiterschalter (9) schliesst, falls der Istwert der Zwischenkreisspannung Uzk zu klein ist;
c) die Regeleinheit (11) nur einen der beiden Leistungshalbleiterschalter (9) schliesst, falls der Istwert der Zwischenkreisspannung Uzk im wesentlichen dem Sollwert entspricht, ein Kurzschluss im Wechselrichter (6) aufgetreten ist oder der Strom durch die Induktivität (8) zu gross wird.

6. Schaltungsanordnung nach Anspruch 5, dadurch gekennzeichnet, dass mehrere elektronisch gesteuerte, parallel geschaltete Induktivitäten (8) vorgesehen sind, deren entsprechende Leistungshalbleiterschalter (9) zeitlich versetzt getaktet werden.

7. Schaltungsanordnung nach einem der Ansprüche 2-6, dadurch gekennzeichnet, dass es sich bei der elektronisch gesteuerten Induktivität (8) um eine supraleitende Spule handelt.

8. Schaltungsanordnung nach einem der Ansprüche 1-7, dadurch gekennzeichnet, dass ein Vierquadrantensteller (12) vorgesehen ist, dessen Lastanschlüsse den Plus- (3) bzw. Minuspol (4) bilden und der an ein Netz, insbesondere über eine Eingangsinduktivität an ein Eisenbahnstromversorgungsnetz angeschlossen ist.

9. Schaltungsanordnung nach einem der Ansprüche 1-8, dadurch gekennzeichnet, dass der Soll-Istwertvergleich einerseits einen Soll-Istwertvergleich zwischen einem vorgegebenen Stromsollwert (Isoll) und dem Strome (Iist) durch die Induktivität (8) und andererseits einen Vergleich zwischen der geglätteten Zwischenkreisspannung (Uzkglatt) und der ungeglätteten (Uzk) umfasst.

10. Schaltungsanordnung nach Anspruch 9 und 5, dadurch gekennzeichnet, dass
a) die Regeleinheit (11) mit einer Ansteuerungslogik (16) verbunden ist, durch welche die Leistungshalbleiterschalter (9) angesteuert werden;
b) eine Spannungsmesseinrichtung (17) vorgesehen ist, mittels welcher die Zwischenkreisspannung gemessen wird;
c) ein Tiefpass (14) vorgesehen ist, in welchem die gemessene Zwischenkreisspannung (Uzk) gefiltert wird, wobei die Spannungsmesseinrichtung (17) und der Tiefpass (14) derart mit der Regeleinheit (11) verbunden sind, dass die gemessene Spannung den Spannungs-Istwert (Uzk) und die gefilterte Spannung den Spannungs-Sollwert (Uzkglatt) darstellen;
d) eine Strommessvorrichtung (19) vorgesehen ist, mittels welcher der Strom (Iist) durch die Induktivität gemessen wird;
e) in der Regeleinheit (11) zwei Vergleicher (13) vorgesehen sind, welche die Soll-Istwert-Vergleiche ausführen, wobei den Vergleichern Regler (15) nachgeschaltet sind, welche die Ausgangssignale der Vergleicher (13) an die Ansteuerungslogik (16) weitergeben.
